# EUROPEAN PATENT APPLICATION

(11) **EP 4 546 488 A1**
(43) Date of publication of application: **30.04.2025**
(21) Application number: 23852487.0
(22) Date of filing: 03.08.2023
(51) Int. Cl.: H01M 10/0567, H01G 11/06, H01G 11/62, H01G 11/64, H01M 10/052

(54) **SECONDARY BATTERY NON-AQUEOUS ELECTROLYTIC SOLUTION, LITHIUM ION BATTERY, AND LITHIUM ION CAPACITOR**

(30) Priority: 08.08.2022 JP 2022126494
(71) Applicant: Sumitomo Seika Chemicals Co., Ltd., Kako-gun, Hyogo 675-0145 (JP)
(72) Inventor: KONO, Yuki, Kako-gun, Hyogo 675-0145 (JP); UENO, Kyoka, Kako-gun, Hyogo 675-0145 (JP)
(74) Representative: Vossius & Partner Patentanwälte Rechtsanwälte mbB
(86) International application number: PCT/JP2023/028478
(87) International publication number: WO 2024/034521

(57) **Abstract**

A non-aqueous electrolyte solution for a secondary battery, containing a first compound represented by the following Formula (1), a second compound being at least one selected from the group consisting of a compound represented by the following Formula (2), a compound represented by the following Formula (3), and a compound represented by the following Formula (4), a non-aqueous solvent, and an electrolyte.

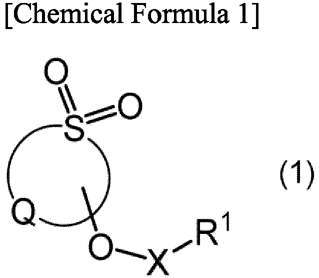

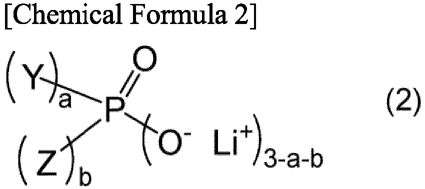

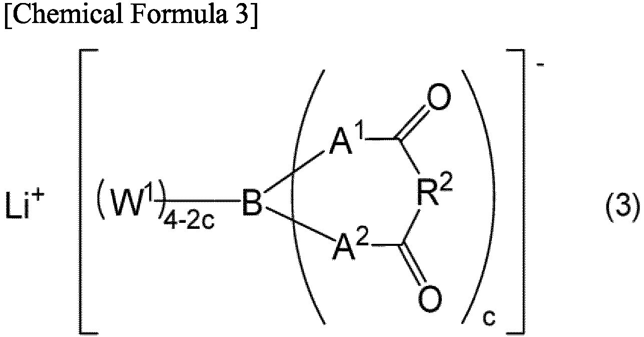

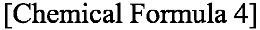

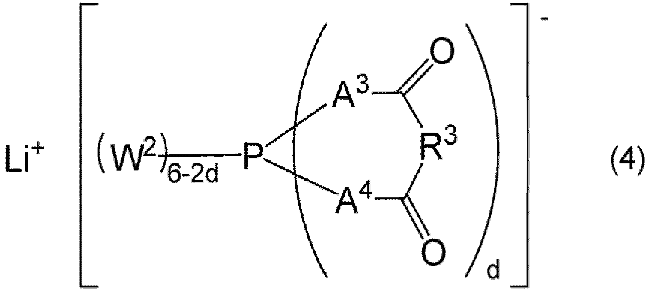

## Description

### Technical Field

The present disclosure relates to a non-aqueous electrolyte solution for a secondary battery, a lithium ion battery, and a lithium ion capacitor.

### Background Art

In a lithium ion battery, use of an electrolyte solution to which various additives are added has been studied. In a case where the electrolyte solution contains an additive, the additive may be decomposed during first charging and discharging, and a coating film called a Solid Electrolyte Interphase (SEI) may be formed on a surface of an electrode. The formation of such an SEI contributes to preventing deterioration of a power storage device such as a non-aqueous electrolyte solution secondary battery in a case where a charging and discharging cycle is repeated, and improving battery performance and the like.

For example, Patent Literature 1 discloses a non-aqueous electrolyte solution secondary battery using a non-aqueous electrolyte solution in which one of Lithium monofluorophosphate or Lithium difluorophosphate as an additive is added. Patent Literature 2 discloses an additive for a non-aqueous electrolyte solution, which contains a specific cyclic sulfone compound having a carbonyloxy group or a sulfonyloxy group. Patent Literature 3 discloses an electrolyte solution for an electrochemical device, which consists of an electrolyte containing a specific ionic metal complex dissolved in a non-aqueous solvent.

### Citation List

### Patent Literature

Patent Literature 1: Japanese Unexamined Patent Publication No. H11-67270
Patent Literature 2: International Publication No. WO2017/043576
Patent Literature 3: Japanese Unexamined Patent Publication No. 2004-146071

### Summary of Invention

### Technical Problem

The present disclosure relates to a non-aqueous electrolyte solution capable of improving high-temperature storage characteristics of a secondary battery.

### Solution to Problem

The present disclosure provides the following [1] to [11] in some aspects.
[1] A non-aqueous electrolyte solution for a secondary battery, containing:
   a first compound represented by the following Formula (1);
   a second compound being at least one selected from the group consisting of a compound represented by the following Formula (2), a compound represented by the following Formula (3), and a compound represented by the following Formula (4);
   a non-aqueous solvent; and
   an electrolyte, 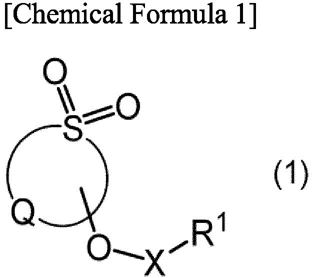
   in the Formula (1), Q represents a hydrocarbon group that has 4 to 8 carbon atoms and may be substituted, the hydrocarbon group forming a cyclic group with a sulfur atom of a sulfonyl group, X represents a sulfonyl group or a carbonyl group, and R¹ represents an alkenyl group having 3 to 6 carbon atoms, which may be substituted with a halogen atom, an alkynyl group having 3 to 6 carbon atoms, which may be substituted with a halogen atom, an alkenyloxy group having 3 to 6 carbon atoms, which may be substituted with a halogen atom, or an alkynyloxy group having 3 to 6 carbon atoms, which may be substituted with a halogen atom, 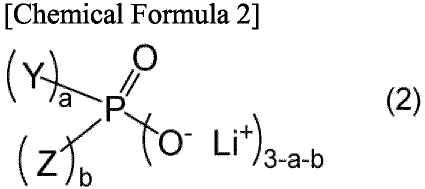
   in the Formula (2), Y and Z each independently represent a hydrogen atom or a fluorine atom, and a and b each independently represent 0 or 1, 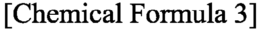 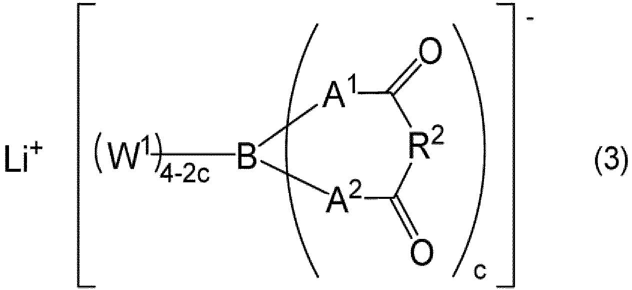
   in the Formula (3), A¹ and A² each independently represent an oxygen atom or a sulfur atom, R² represents a direct bond or a hydrocarbon group having 1 to 3 carbon atoms, W¹ represents a halogen atom, and c represents 1 or 2, 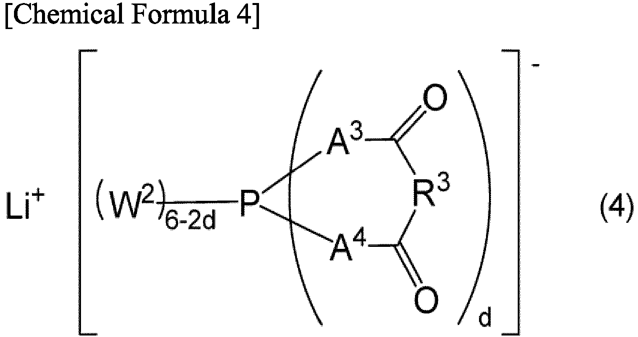
   in the Formula (4), A³ and A⁴ each independently represent an oxygen atom or a sulfur atom, R³ represents a direct bond or a hydrocarbon group having 1 to 3 carbon atoms, W² represents a halogen atom, and d represents 1 or 2.
[2] The non-aqueous electrolyte solution for a secondary battery according to [1],
   in which Q is a hydrocarbon group having 4 carbon atoms, which may be substituted.
[3] The non-aqueous electrolyte solution for a secondary battery according to [1] or [2],
   in which X is a sulfonyl group.
[4] The non-aqueous electrolyte solution for a secondary battery according to [1] or [2],
   in which the second compound contains the compound represented by the Formula (3).
[5] The non-aqueous electrolyte solution for a secondary battery according to [3],
   in which the second compound contains the compound represented by the Formula (3).
[6] The non-aqueous electrolyte solution for a secondary battery according to [1] or [2],
   in which the second compound contains the compound represented by the Formula (2), and
   both Y and Z are fluorine atoms.
[7] The non-aqueous electrolyte solution for a secondary battery according to any one of [3] to [5],
   in which the second compound contains the compound represented by the Formula (2), and
   both Y and Z are fluorine atoms.
[8] The non-aqueous electrolyte solution for a secondary battery according to any one of [1] to [7],
   in which the electrolyte contains a lithium salt.
[9] An additive used in combination with a compound represented by the following Formula (1) to be added to a non-aqueous electrolyte solution, the additive containing:
   at least one selected from the group consisting of a compound represented by the following Formula (2), a compound represented by the following Formula (3), and a compound represented by the following Formula (4), 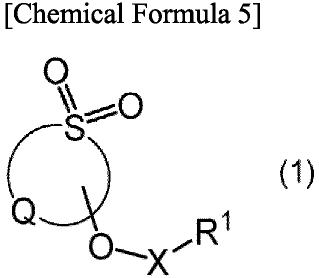
   in the Formula (1), Q represents a hydrocarbon group that has 4 to 8 carbon atoms and may be substituted, the hydrocarbon group forming a cyclic group with a sulfur atom of a sulfonyl group, X represents a sulfonyl group or a carbonyl group, and R¹ represents an alkenyl group having 3 to 6 carbon atoms, which may be substituted with a halogen atom, an alkynyl group having 3 to 6 carbon atoms, which may be substituted with a halogen atom, an alkenyloxy group having 3 to 6 carbon atoms, which may be substituted with a halogen atom, or an alkynyloxy group having 3 to 6 carbon atoms, which may be substituted with a halogen atom, 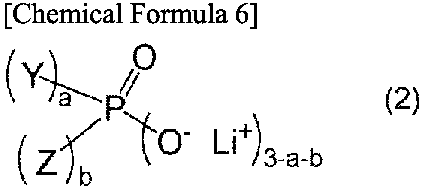
   in the Formula (2), Y and Z each independently represent a hydrogen atom or a fluorine atom, and a and b each independently represent 0 or 1, 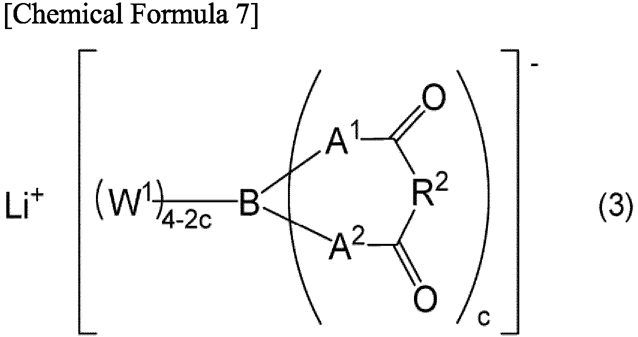
   in the Formula (3), A¹ and A² each independently represent an oxygen atom or a sulfur atom, R² represents a direct bond or a hydrocarbon group having 1 to 3 carbon atoms, W¹ represents a halogen atom, and c represents 1 or 2, 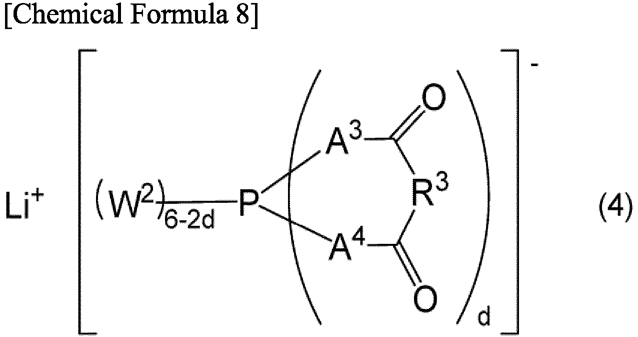
   in the Formula (4), A³ and A⁴ each independently represent an oxygen atom or a sulfur atom, R³ represents a direct bond or a hydrocarbon group having 1 to 3 carbon atoms, W² represents a halogen atom, and d represents 1 or 2.
[10] A lithium ion battery including:
   the non-aqueous electrolyte solution for a secondary battery according to any one of [1] to [8];
   a positive electrode; and
   a negative electrode.
[11] A lithium ion capacitor including:
   the non-aqueous electrolyte solution for a secondary battery according to any one of [1] to [8];
   a positive electrode; and
   a negative electrode.

### Advantageous Effects of Invention

According to the present disclosure, it is possible to provide a non-aqueous electrolyte solution capable of improving high-temperature storage characteristics of a secondary battery. Specifically, the non-aqueous electrolyte solution according to the present disclosure can reduce an amount of gas generated in a case where a secondary battery in a charged state is stored at a high temperature, and can maintain a residual capacity and a recovery capacity at a high level.

### Brief Description of Drawings

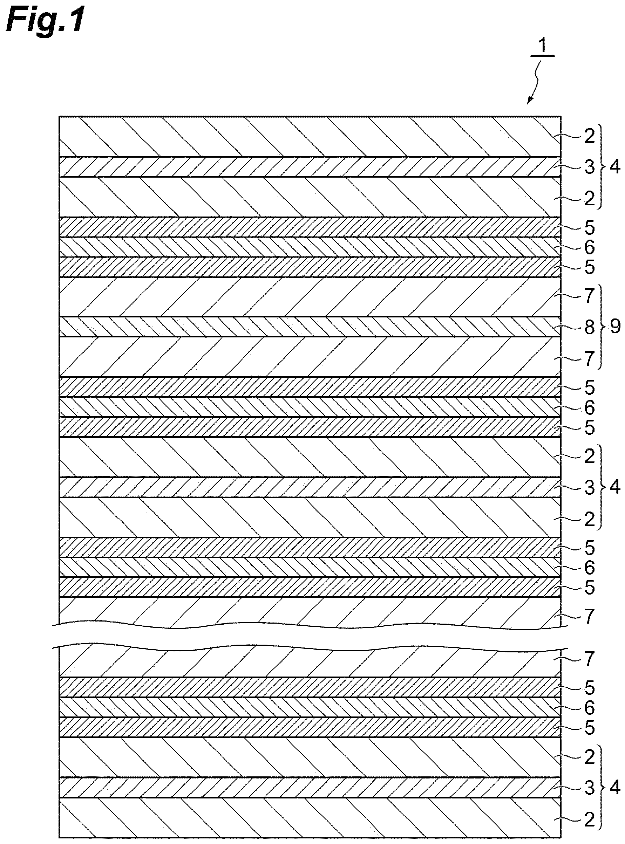

Fig. 1 is a cross-sectional view showing an example of a lithium ion battery.

### Description of Embodiments

The present invention is not limited to the examples described below.

The electrolyte solution for a secondary battery according to one embodiment contains a first compound, a second compound, a non-aqueous solvent, and an electrolyte.

### <First compound>

The first compound is a compound represented by the following Formula (1).

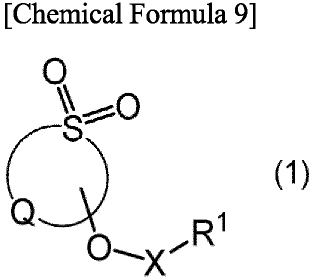

In the Formula (1), Q represents a hydrocarbon group that has 4 to 8 carbon atoms and may be substituted, the hydrocarbon group forming a cyclic group with a sulfur atom of a sulfonyl group, X represents a sulfonyl group or a carbonyl group, and R¹ represents an alkenyl group having 3 to 6 carbon atoms, which may be substituted with a halogen atom, an alkynyl group having 3 to 6 carbon atoms, which may be substituted with a halogen atom, an alkenyloxy group having 3 to 6 carbon atoms, which may be substituted with a halogen atom, or an alkynyloxy group having 3 to 6 carbon atoms, which may be substituted with a halogen atom.

In the present specification, "may be substituted" means that one or more of hydrogen atoms contained in each group may be substituted with a substituent. In a case where the substituent is a halogen atom, "may be substituted with a halogen atom" means that one or more of the hydrogen atoms contained in each group may be substituted with a halogen atom.

Each of the alkenyl group, the alkynyl group, the alkenyloxy group, and the alkynyloxy group as R¹ may be unsubstituted, or may have one or more halogen atoms as a substituent. Examples of the halogen atom include an iodine atom, a bromine atom, and a fluorine atom. The halogen atom as the substituent may be a fluorine atom. In a case where each group as R¹ is substituted with a fluorine atom, battery resistance can be further reduced.

The alkenyl group having 3 to 6 carbon atoms, which may be substituted with a halogen atom, may have 3 to 5 carbon atoms or may have 3 or 4 carbon atoms. The alkenyl group may be linear or branched. Examples of the alkenyl group having 3 to 6 carbon atoms, which may be substituted with a halogen atom, include an allyl group, a methallyl group, a 1-butenyl group, a 2-butenyl group, a 3-butenyl group, an isobutenyl group, and a 1,1-difluoro-1-propenyl group. The alkenyl group may be an allyl group which may be substituted with a halogen atom or a methallyl group which may be substituted with a halogen atom. In a case where the alkenyl group is an allyl group which may be substituted with a halogen atom or a methallyl group which may be substituted with a halogen atom, a firmer SEI is easily formed.

The alkynyl group having 3 to 6 carbon atoms, which may be substituted with a halogen atom, may have 3 to 5 carbon atoms or may have 3 or 4 carbon atoms. The alkynyl group may be linear or branched. Examples of the alkynyl group having 3 to 6 carbon atoms, which may be substituted with a halogen atom, include a 1-propynyl group, a 2-propynyl group, a 1-butynyl group, a 2-butynyl group, and a 3-butynyl group. The alkynyl group may be a 2-propynyl group which may be substituted with a halogen atom. In a case where the alkynyl group is a 2-propynyl group which may be substituted with a halogen atom, a firmer SEI is easily formed.

The alkenyloxy group having 3 to 6 carbon atoms, which may be substituted with a halogen atom, may have 3 to 5 carbon atoms or may have 3 or 4 carbon atoms. The alkenyloxy group may be linear or branched. Examples of the alkenyloxy group having 3 to 6 carbon atoms, which may be substituted with a halogen atom, include a 2-propenyloxy group, a 1-methyl-2-propenyloxy group, a 2-methyl-2-propenyloxy group, a 2-butenyloxy group, and a 3-butenyloxy group.

The alkynyloxy group having 3 to 6 carbon atoms, which may be substituted with a halogen atom, may have 3 to 5 carbon atoms or may have 3 or 4 carbon atoms. The alkynyloxy group may be linear or branched. Examples of the alkynyloxy group having 3 to 6 carbon atoms, which may be substituted with a halogen atom, include a 2-propynyloxy group, a 1-methyl-2-propynyloxy group, a 2-methyl-2-propynyloxy group, a 2-butynyloxy group, and a 3-butynyloxy group.

In a case where X is a sulfonyl group, R¹ may be an alkenyl group having 3 to 6 carbon atoms, which may be substituted with a halogen atom, an alkynyl group having 3 to 6 carbon atoms, which may be substituted with a halogen atom, an alkenyloxy group having 3 to 6 carbon atoms, which may be substituted with a halogen atom, or an alkynyloxy group having 3 to 6 carbon atoms, which may be substituted with a halogen atom; may be an alkenyl group having 3 to 5 carbon atoms, which may be substituted with a halogen atom, or an alkenyloxy group having 3 to 5 carbon atoms, which may be substituted with a halogen atom; and may be an alkenyl group having 3 to 5 carbon atoms, which may be substituted with a halogen atom.

In a case where X is a carbonyl group, R¹ may be an alkenyl group having 3 to 6 carbon atoms, which may be substituted with a halogen atom, an alkynyl group having 3 to 6 carbon atoms, which may be substituted with a halogen atom, an alkenyloxy group having 3 to 6 carbon atoms, which may be substituted with a halogen atom, or an alkynyloxy group having 3 to 6 carbon atoms, which may be substituted with a halogen atom; may be an alkenyl group having 3 to 5 carbon atoms, which may be substituted with a halogen atom, or an alkenyloxy group having 3 to 5 carbon atoms, which may be substituted with a halogen atom; and may be an alkenyl group having 3 to 5 carbon atoms, which may be substituted with a halogen atom.

The hydrocarbon group as Q may be a hydrocarbon group having 4 to 6 carbon atoms, or a hydrocarbon group having 4 carbon atoms. In these cases, battery resistance can be further reduced. The hydrocarbon group as Q may be a saturated hydrocarbon group or an unsaturated hydrocarbon group. The number of unsaturated bonds in the unsaturated hydrocarbon group may be 1 or more or 2 or less. The hydrocarbon group as Q has a substituent represented by -O-X-R¹ in the Formula (1) at any position. The hydrocarbon group as Q may be further substituted with a substituent other than the group represented by -O-X-R¹. Examples of the substituent which the hydrocarbon group as Q may have, other than the group represented by -O-X-R¹, include a halogen atom.

The compound represented by the Formula (1) may be a compound represented by the following Formula (1a) or the following Formula (1b). In this case, storage characteristics of the secondary battery can be further improved.

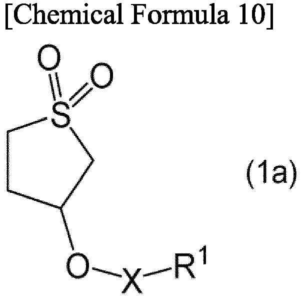

In the Formula (1a), X and R¹ have the same meanings as X and R¹ in the Formula (1), respectively.

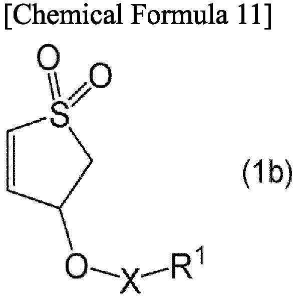

In the Formula (1b), X and R¹ have the same meanings as X and R¹ in the Formula (1), respectively.

Examples of the above-mentioned compound represented by the Formula (1a) include compounds represented by the Formulae (1-1), (1-3), (1-5), (1-6), (1-7), (1-8), and (1-9) shown below. Examples of the above-mentioned compound represented by the Formula (1b) include compounds represented by the Formulae (1-2) and (1-4) shown below.

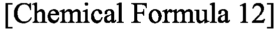

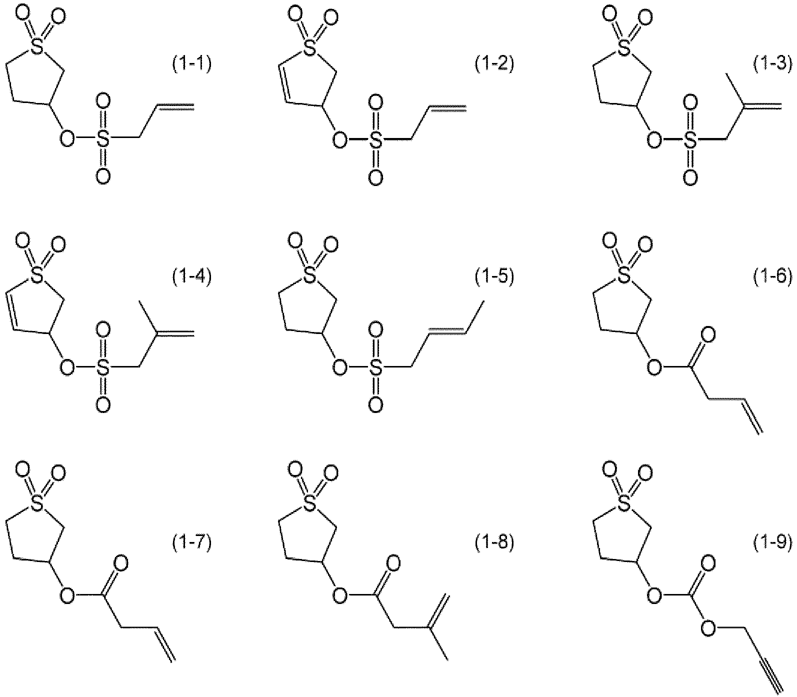

An example of a method for synthesizing the above-mentioned compound represented by the Formula (1-1) is shown below. First, 3-hydroxysulfolane and allyl sulfonyl chloride are dissolved in an organic solvent and cooled with ice, triethylamine is added dropwise thereto, and the mixture is stirred for 1 hour to carry out a reaction. Thereafter, water is added to the reaction solution, and the precipitated solid is filtered and washed with methanol to obtain a target compound.

A content of the first compound may be 0.1% by mass or more or 0.5% by mass or more, and may be 10% by mass or less or 5% by mass or less, based on the total mass of the non-aqueous electrolyte solution. The content of the first compound may be 0.1 % to 10% by mass, 0.1% to 5% by mass, 0.5% to 10% by mass, or 0.5% to 5% by mass based on the total mass of the non-aqueous electrolyte solution. In a case where the non-aqueous electrolyte solution contains a plurality of kinds of components as the first compound, the content of the first compound means the total amount of the plurality of kinds of components.

### <Second compound>

The second compound is at least one selected from the group consisting of a compound represented by the following Formula (2), a compound represented by the following Formula (3), and a compound represented by the following Formula (4). The second compound may contain only one or two or more kinds of these compounds.

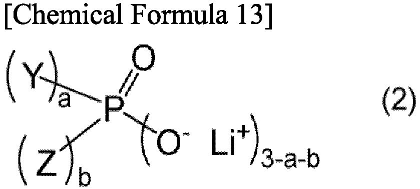

In the Formula (2), Y and Z each independently represent a hydrogen atom or a fluorine atom, and a and b each independently represent 0 or 1.

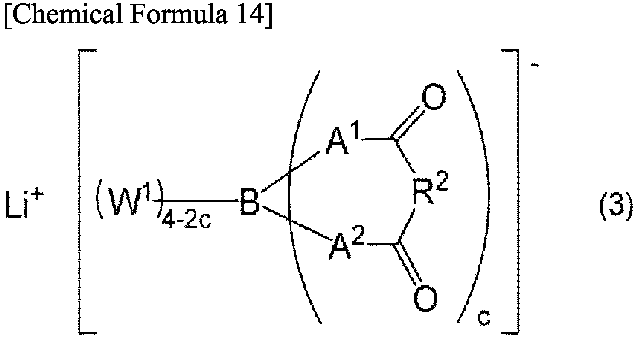

In the Formula (3), A¹ and A² each independently represent an oxygen atom or a sulfur atom, R² represents a direct bond (single bond) or a hydrocarbon group having 1 to 3 carbon atoms, W¹ represents a halogen atom, and c represents 1 or 2.

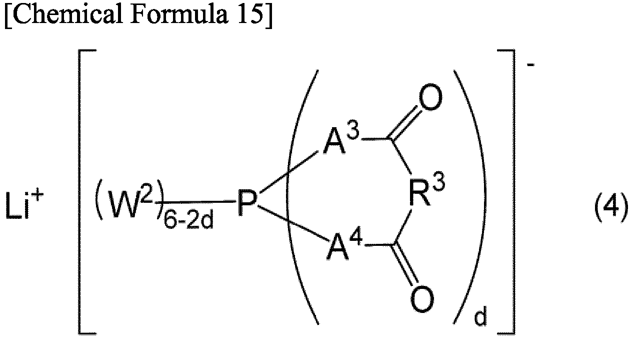

In the Formula (4), A³ and A⁴ each independently represent an oxygen atom or a sulfur atom, R³ represents a direct bond (single bond) or a hydrocarbon group having 1 to 3 carbon atoms, W² represents a halogen atom, and d represents 1 or 2.

In the Formula (2), both Y and Z may be hydrogen atoms, both Y and Z may be fluorine atoms, Y may be a fluorine atom and Z may be a hydrogen atom, or Y may be a hydrogen atom and Z may be a fluorine atom. In a case where both Y and Z are fluorine atoms, battery resistance can be further reduced.

Examples of the compound represented by the Formula (2) include compounds represented by the Formulae (2-1) and (2-2) shown below. As the compound represented by the Formula (2), a commercially available product may be used.

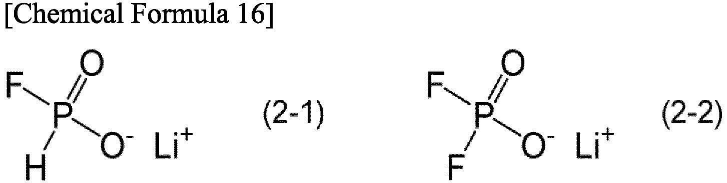

A content of the compound represented by the Formula (2) may be 0.1% by mass or more or 0.5% by mass or more, and may be 10% by mass or less or 5% by mass or less, based on the total mass of the non-aqueous electrolyte solution. The content of the compound represented by the Formula (2) may be 0.1% to 10% by mass, 0.1% to 5% by mass, 0.5% to 10% by mass, or 0.5% to 5% by mass based on the total mass of the non-aqueous electrolyte solution.

In the Formula (3), both A¹ and A² may be oxygen atoms, both A¹ and A² may be sulfur atoms, A¹ may be an oxygen atom and A² may be a sulfur atom, or A¹ may be a sulfur atom and A² may be an oxygen atom.

In the Formula (3), W¹ represents a halogen atom. Examples of the halogen atom include an iodine atom, a bromine atom, and a fluorine atom; and a fluorine atom may be used. In the Formula (3), in a case where c is 1, the number of W¹'s is 4 - 2c = 2; and in a case where c is 2, the number of W¹'s is 4 - 2c = 0. In a case where two W¹'s are present in the Formula (3), the two W¹'s may be the same or different from each other. Two W¹'s present in the Formula (3) may be fluorine atoms.

The hydrocarbon group as R² may be a hydrocarbon group having 1 or 2 carbon atoms, or a hydrocarbon group having 1 carbon atom. The hydrocarbon group as R² may be a saturated hydrocarbon group or an unsaturated hydrocarbon group. In a case where R² in the Formula (3) is a direct bond, the compound represented by the Formula (3) is a compound represented by the following Formula (3a).

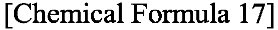

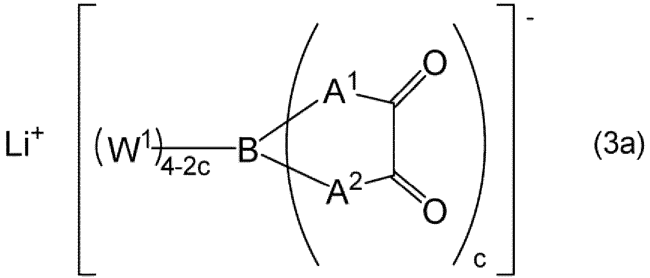

In the Formula (3a), A¹, A², W¹, and c have the same meanings as A¹, A², W¹, and c in the Formula (3), respectively.

Examples of the compound represented by the Formula (3) include compounds represented by the Formulae (3-1) and (3-2) shown below. As the compound represented by the Formula (3), a commercially available product may be used.

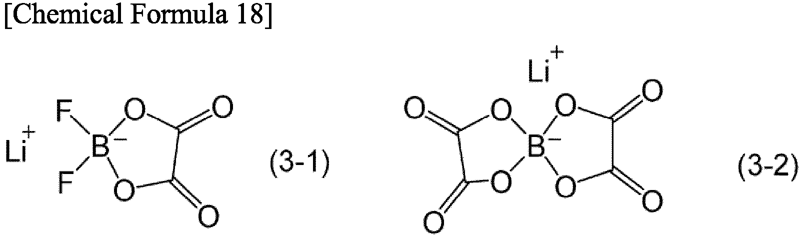

A content of the compound represented by the Formula (3) may be 0.1% by mass or more or 0.5% by mass or more, and may be 10% by mass or less or 5% by mass or less, based on the total mass of the non-aqueous electrolyte solution. The content of the compound represented by the Formula (3) may be 0.1% to 10% by mass, 0.1% to 5% by mass, 0.5% to 10% by mass, or 0.5% to 5% by mass based on the total mass of the non-aqueous electrolyte solution.

In the Formula (4), both A³ and A⁴ may be oxygen atoms, both A³ and A⁴ may be sulfur atoms, A³ may be an oxygen atom and A⁴ may be a sulfur atom, or A³ may be a sulfur atom and A⁴ may be an oxygen atom.

In the Formula (4), W² represents a halogen atom. Examples of the halogen atom include an iodine atom, a bromine atom, and a fluorine atom; and a fluorine atom may be used. In the Formula (4), in a case where d is 1, the number of W²'s is 6 - 2d = 4; and in a case where d is 2, the number of W²'s is 6 - 2d = 2. A plurality of W²'s present in the Formula (4) may be the same or different from each other. All of the plurality of W²'s in the Formula (4) may be fluorine atoms.

The hydrocarbon group as R³ may be a hydrocarbon group having 1 or 2 carbon atoms, or a hydrocarbon group having 1 carbon atom. The hydrocarbon group as R³ may be a saturated hydrocarbon group or an unsaturated hydrocarbon group. In a case where R³ in the Formula (4) is a direct bond, the compound represented by the Formula (4) is a compound represented by the following Formula (4a).

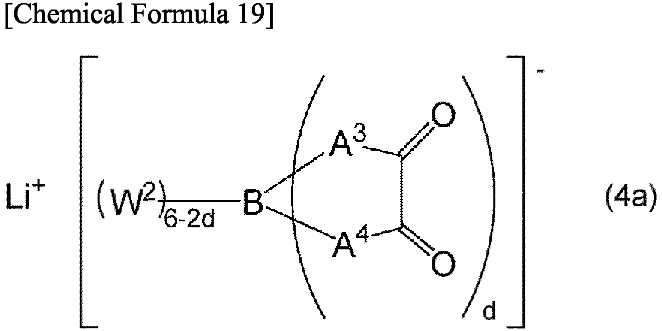

In the Formula (4a), A³, A⁴, W², and d have the same meanings as A³, A⁴, W², and d in the Formula (4), respectively.

Examples of the compound represented by the Formula (4) include compounds represented by the Formulae (4-1) and (4-2) shown below. As the compound represented by the Formula (4), a commercially available product may be used.

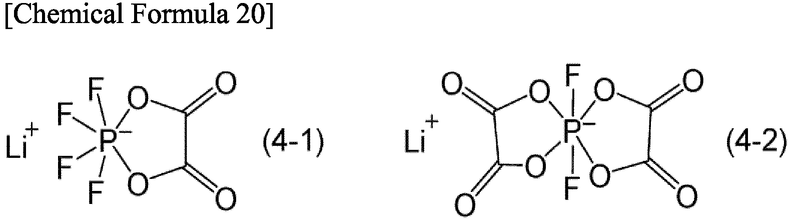

A content of the compound represented by the Formula (4) may be 0.1% by mass or more or 0.5% by mass or more, and may be 10% by mass or less or 5% by mass or less, based on the total mass of the non-aqueous electrolyte solution. The content of the compound represented by the Formula (4) may be 0.1% to 10% by mass, 0.1% to 5% by mass, 0.5% to 10% by mass, or 0.5% to 5% by mass based on the total mass of the non-aqueous electrolyte solution.

A content of the second compound may be 0.1% by mass or more or 0.5% by mass or more, and may be 10% by mass or less or 5% by mass or less, based on the total mass of the non-aqueous electrolyte solution. The content of the second compound may be 0.1 % to 10% by mass, 0.1% to 5% by mass, 0.5% to 10% by mass, or 0.5% to 5% by mass based on the total mass of the non-aqueous electrolyte solution. In a case where the non-aqueous electrolyte solution contains a plurality of kinds of components as the second compound, the content of the second compound means the total amount of the plurality of kinds of components.

In the non-aqueous electrolyte solution, a mass ratio of the content of the second compound to the content of the first compound (Content of second compound/Content of first compound) may be 0.1 or more, 0.25 or more, or 0.5 or more. In addition, the mass ratio may be 20 or less, 5 or less, or 3 or less. The mass ratio may be 0.1 to 20, 0.1 to 5, 0.1 to 3, 0.25 to 20, 0.25 to 5, 0.25 to 3, 0.5 to 20, 0.5 to 5, or 0.5 to 3.

In a case where the second compound is added to the non-aqueous electrolyte solution in combination with the first compound, the high-temperature storage characteristics of the secondary battery can be improved. The additive according to one embodiment is an additive used in combination with the compound represented by the Formula (1) to be added to a non-aqueous electrolyte solution, and is an additive containing at least one selected from the group consisting of the compound represented by the Formula (2), the compound represented by the Formula (3), and the compound represented by the Formula (4).

### <Non-aqueous solvent>

From the viewpoint of keeping a viscosity of the electrolyte solution for a secondary battery low, the non-aqueous solvent may be an aprotic solvent. The non-aqueous solvent may contain at least one selected from the group consisting of cyclic carbonate, chain carbonate, aliphatic carboxylic acid ester, lactone, lactam, cyclic ether, chain ether, sulfone, nitrile, and halogen derivatives thereof. The non-aqueous solvent may contain at least one of cyclic carbonate and chain carbonate, or may contain a combination of cyclic carbonate and chain carbonate.

Examples of the cyclic carbonate include ethylene carbonate, propylene carbonate, butylene carbonate, and fluoroethylene carbonate. Examples of the chain carbonate include dimethyl carbonate, diethyl carbonate, and ethyl methyl carbonate. Examples of the aliphatic carboxylic acid ester include methyl acetate, ethyl acetate, methyl propionate, ethyl propionate, methyl butyrate, methyl isobutyrate, and methyl trimethylacetate. Examples of the lactone include γ-butyrolactone. Examples of the lactam include ε-caprolactam and N-methylpyrrolidone. Examples of the cyclic ether include tetrahydrofuran, 2-methyltetrahydrofuran, tetrahydropyran, and 1,3-dioxolane. Examples of the chain ether include 1,2-diethoxyethane and ethoxymethoxyethane. Examples of the sulfone include sulfolane. Examples of the nitrile include acetonitrile. Examples of the halogen derivative include halogen derivatives of cyclic carbonate, such as 4-fluoro-1,3-dioxolan-2-one, 4-chloro-1,3-dioxolan-2-one, and 4,5-difluoro-1,3-dioxolan-2-one. These non-aqueous solvents may be used alone or in combination of two or more kinds thereof. These non-aqueous solvents are particularly suitable for use in secondary batteries such as a lithium ion battery.

A content of the non-aqueous solvent may be, for example, 70% by mass to 99% by mass based on the total mass of the non-aqueous electrolyte solution.

### <Electrolyte>

The electrolyte may contain a lithium salt which serves as an ion source of lithium ions, or a sodium salt which serves as an ion source of sodium ions. The lithium salt may be at least one selected from the group consisting of LiAlCl₄, LiBF₄, LiPF₆, LiClO₄, lithium bis(trifluoromethanesulfonyl)imide (LiTFSi), lithium bis(fluorosulfonyl)imide (LiFSi), LiAsF₆, and LiSbF₆. Examples of the sodium salt include NaPF₆, NaBF₄, NaClO₄, NaAsF₆, NaCF₃SO₃, NaN(CF₃SO₂)₂, NaN(C₂F₅SO₂)₂, and NaC(CF₃SO₂)₃. These lithium salts may be used alone or in combination of two or more kinds thereof. The electrolyte may contain LiBF₄ and/or LiPF₆. In a case where the electrolyte contains LiBF₄ and/or LiPF₆, ion conductivity of the electrolyte solution can be increased, and furthermore, deterioration of performance of the secondary battery due to long-term use can be suppressed by oxidation-reduction resistance characteristics.

A concentration of the electrolyte may be 0.1 mol/L or more or 0.5 mol/L or more, and may be 2.0 mol/L or less or 1.5 mol/L or less, based on the total volume of the non-aqueous electrolyte solution. The concentration of the electrolyte may be 0.1 to 2.0 mol/L, 0.1 to 1.5 mol/L, 0.5 to 2.0 mol/L, or 0.5 to 1.5 mol/L based on the total volume of the non-aqueous electrolyte solution.

### <Non-aqueous electrolyte solution>

The non-aqueous electrolyte solution may contain other components as necessary. Examples of the other components include a positive electrode protector, a flame retardant, an overcharge inhibitor, a cyclic carbonate compound, a nitrile compound, an isocyanate compound, a compound having an acetylene-1,2-diyl group (-C≡C-), a compound having a sulfonyl group, other than the above-mentioned first compound, a phosphoric acid ester compound, an acid anhydride, a cyclic phosphazene compound, a compound containing a boron atom, other than the above-mentioned compound represented by the Formula (3), and a compound containing a silicon atom.

Examples of the cyclic carbonate compound include 4-fluoro-1,3-dioxolan-2-one (FEC), trans- or cis-4,5-difluoro-1,3-dioxolan-2-one (DFEC), vinylene carbonate (VC), vinyl ethylene carbonate (VEC), and 4-ethynyl-1,3-dioxolan-2-one (EEC). The cyclic carbonate compound may be VC, FEC, VEC, or a combination thereof.

Examples of the nitrile compound include mononitrile compounds such as acetonitrile and propionitrile; and dinitrile compounds such as succinonitrile, glutaronitrile, adiponitrile, pimelonitrile, suberonitrile, and sebaconitrile. The nitrile compound may be succinonitrile, adiponitrile, or a combination thereof.

Examples of the isocyanate compound include methyl isocyanate, ethyl isocyanate, butyl isocyanate, phenyl isocyanate, tetramethylene diisocyanate, hexamethylene diisocyanate, octamethylene diisocyanate, 1,4-phenylene diisocyanate, 2-isocyanatoethyl acrylate, and 2-isocyanatoethyl methacrylate.

Examples of the compound having an acetylene-1,2-diyl group (-C≡C-) include 2-propynyl methyl carbonate, acetic acid-2-propynyl, formic acid-2-propynyl, methacrylic acid-2-propynyl, methanesulfonic acid-2-propynyl, vinylsulfonic acid-2-propynyl, 2-(methanesulfonyloxy)propionic acid-2-propynyl, di(2-propynyl)oxalate, methyl-2-propynyl oxalate, ethyl-2-propynyl oxalate, glutaric acid di(2-propynyl), 2-butyn-1,4-diyldimethanesulfonate, 2-butyn-1,4-diyldiformate, and 2,4-hexadiyne-1,6-diyldimethanesulfonate.

Examples of the compound having a sulfonyl group (>S(=O)₂), other than the above-mentioned first compound include sultones such as 1,3-propanesultone (PS), 1,3-butanesultone, 2,4-butanesultone, 1,4-butanesultone, 1,3-propenesultone, 2,2-dioxide-1,2-oxathiolane-4-yl acetate, and 5,5-dimethyl-1,2-oxathiolane-4-one 2,2-dioxide; cyclic sulfites such as ethylene sulfite, ethylene sulfate, hexahydrobenzo[1,3,2]dioxathiolane-2-oxide (also referred to as 1,2-cyclohexanediol cyclic sulfite), and 5-vinyl-hexahydro-1,3,2-benzodioxathiol-2-oxide; sulfonic acid esters such as butane-2,3-diyldimethanesulfonate, butane-1,4-diyldimethanesulfonate; and methylene methanedisulfonate, 1,3-propanedisulfonic acid anhydride, divinyl sulfone, 1,2-bis(vinylsulfonyl)ethane, and bis(2-vinylsulfonylethyl)ether.

Examples of the phosphoric acid ester compound include trimethyl phosphate, tributyl phosphate, trioctyl phosphate, tris(2,2,2-trifluoroethyl) phosphate, bis(2,2,2-trifluoroethyl)methyl phosphate, bis(2,2,2-trifluoroethyl)ethyl phosphate, bis(2,2,2-trifluoroethyl) 2,2-difluoroethyl phosphate, bis(2,2,2-trifluoroethyl) 2,2,3,3-tetrafluoropropyl phosphate, bis(2,2-difluoroethyl) 2,2,2-trifluoroethyl phosphate, bis(2,2,3,3-tetrafluoropropyl) 2,2,2-trifluoroethyl phosphate, (2,2,2-trifluoroethyl)(2,2,3,3-tetrafluoropropyl)methyl phosphate, tris(1,1,1,3,3,3-hexafluoropropan-2-yl) phosphate, methyl methylene bisphosphonate, ethyl methylene bisphosphonate, methyl ethylene bisphosphonate, ethyl ethylene bisphosphonate, methyl butylene bisphosphonate, ethyl butylene bisphosphonate, methyl 2-(dimethylphosphoryl)acetate, ethyl 2-(dimethylphosphoryl)acetate, methyl 2-(diethylphosphoryl)acetate, ethyl 2-(diethylphosphoryl)acetate, 2-propynyl 2-(dimethylphosphoryl)acetate, 2-propynyl 2-(diethylphosphoryl)acetate, methyl 2-(dimethoxyphosphoryl)acetate, ethyl 2-(dimethoxyphosphoryl)acetate, methyl 2-(diethoxyphosphoryl)acetate, ethyl 2-(diethoxyphosphoryl)acetate, 2-propynyl 2-(dimethoxyphosphoryl)acetate, 2-propynyl 2-(diethoxyphosphoryl)acetate, methyl pyrophosphate, and ethyl pyrophosphate.

Examples of the acid anhydride include acetic acid anhydride, propionic acid anhydride, succinic acid anhydride, maleic acid anhydride, 3-allyl succinic acid anhydride, glutaric acid anhydride, itaconic acid anhydride, and 3-sulfo-propionic acid anhydride.

Examples of the cyclic phosphazene compound include methoxypentafluorocyclotriphosphazene, ethoxypentafluorocyclotriphosphazene, phenoxypentafluorocyclotriphosphazene, and ethoxyheptafluorocyclotetraphosphazene.

Examples of the compound containing a boron atom, other than the above-mentioned compound represented by the Formula (3), include boroxine, trimethylboroxine, trimethoxyboroxine, triethylboroxine, triethoxyboroxine, triisopropylboroxine, triisopropoxyboroxine, tri-n-propylboroxine, tri-n-propoxyboroxine, tri-n-butylboroxine, tri-n-butyloxyboroxine, triphenylboroxine, triphenoxyboroxine, tricyclohexylboroxine, and tricyclohexoxyboroxine.

Examples of the compound containing a silicon atom include hexamethylcyclotrisiloxane, hexaethylcyclotrisiloxane, hexaphenylcyclotrisiloxane, 1,3,5-trimethyl-1,3,5-trivinylcyclotrisiloxane, octamethylcyclotetrasiloxane, decamethylcyclopentasiloxane, trimethylfluorosilane, triethylfluorosilane, tripropylfluorosilane, phenyldimethylfluorosilane, triphenylfluorosilane, vinyldimethylfluorosilane, vinyldiethylfluorosilane, vinyldiphenylfluorosilane, divinyldifluorosilane, divinyldimethylsilane, trimethoxyfluorosilane, triethoxyfluorosilane, dimethyldifluorosilane, diethyldifluorosilane, trivinylfluorosilane, trivinylmethylsilane, ethylvinyldifluorosilane, methyltrifluorosilane, ethyltrifluorosilane, hexamethyldisiloxane, 1,3-diethyltetramethyldisiloxane, hexaethyldisiloxane, octamethyltrisiloxane, methoxytrimethylsilane, ethoxytrimethylsilane, dimethoxydimethylsilane, trimethoxymethylsilane, tetramethoxysilane, tetravinylsilane, tetraallylsilane, tetrabutenylsilane, bis(trimethylsilyl) peroxide, trimethylsilyl acetate, triethylsilyl acetate, trimethylsilyl propionate, trimethylsilyl methacrylate, trimethylsilyl trifluoroacetate, trimethylsilyl methanesulfonate, trimethylsilyl ethanesulfonate, triethylsilyl methanesulfonate, trimethylsilyl fluoromethanesulfonate, bis(trimethylsilyl)sulfate, tris(trimethylsiloxy)boron, tris(trimethylsilyl)phosphate, and tris(trimethylsilyl)phosphite.

The non-aqueous electrolyte solution for a secondary battery described above is particularly useful for use in secondary batteries. An example of the secondary battery is mainly composed of the above-mentioned non-aqueous electrolyte solution, a positive electrode, and a negative electrode. The secondary battery may be a sodium ion battery or a lithium ion battery, or may be a lithium ion capacitor. The lithium ion battery according to one embodiment includes the above-mentioned non-aqueous electrolyte solution for a secondary battery, a positive electrode, and a negative electrode. The lithium ion capacitor according to one embodiment includes the above-mentioned non-aqueous electrolyte solution for a secondary battery, a positive electrode, and a negative electrode.

Fig. 1 is a cross-sectional view schematically showing an example of the lithium ion battery. A lithium ion battery 1 shown in Fig. 1 includes a negative electrode 4 and a positive electrode 9 alternately stacked, a non-aqueous electrolyte solution 5 placed between the negative electrode 4 and the positive electrode 9, and a separator 6 provided in the non-aqueous electrolyte solution 5. Here, the plurality of negative electrodes 4 and the plurality of positive electrodes 9 are stacked such that a main surface of the negative electrode 4 and a main surface of the positive electrode 9 face each other with the separator 6 interposed therebetween. The lithium ion battery 1 includes 7 layers of the negative electrode 4 and 6 layers of the positive electrode 9, although part of the repeated structure is omitted in Fig. 1. The negative electrode 4 includes a negative electrode current collector 3, and negative electrode active material layers 2 provided on both sides of the negative electrode current collector 3. The positive electrode 9 includes a positive electrode current collector 8, and positive electrode active material layers 7 provided on both sides of the positive electrode current collector 8. The non-aqueous electrolyte solution 5 is the above-mentioned non-aqueous electrolyte solution for a secondary battery.

The positive electrode current collector 8 and the negative electrode current collector 3 may be, for example, a metal foil formed of a metal such as aluminum, copper, nickel, and stainless steel.

The positive electrode active material layer 7 contains a positive electrode active material. The positive electrode active material may be a lithium-containing composite oxide, or may be a lithium-containing phosphate compound. Examples of the lithium-containing composite oxide include LiMnO₂, LiFeO₂, LiCoO₂, LiMn₂O₄, LiNi_{1/3}Co_{1/3}Mn_{1/3}0₂, LiNi_{0.5}CO_{0.2}Mn_{0.3}O₂, LiNi_{0.6}Co_{0.2}Mn_{0.2}O₂, LiNi_{0.8}Co_{0.1}Mn_{0.1}O₂, LiNiₓCo_{y}M_{z}O₂, in which 0.01 < x < 1, 0 ≤ y ≤ 1, 0 ≤ z ≤ 1, and x + y + z = 1; M is at least one element selected from the group consisting of Mn, V, Mg, Mo, Nb, Fe, Cu, and Al, Li_{z}Ni_{(1-x-y)}CoₓM_{y}O₂, in which 0 ≤ x ≤ 0.40, 0 ≤ y ≤ 0.40, and 0.90 ≤ z ≤ 1.20; M is at least one element selected from the group consisting of Mn, V, Mg, Mo, Nb, and Al, and Li_{z}Co₍₁₋ₓ₎MₓO₂, in which 0 ≤ x ≤ 0.1 and 0.97 ≤ z ≤ 1.20; M is at least one element selected from the group consisting of Mn, Ni, V, Mg, Mo, Nb, and Al.

The above-mentioned positive electrode active material may be Li_{z}Ni_{(1-x-y)}CoₓM_{y}O₂, in which 0.01 ≤ x ≤ 0.20, 0 ≤ y ≤ 0.30, and 0.90 ≤ z ≤ 1.20; M is at least one element selected from the group consisting of Mn, V, Mg, Mo, Nb, and Al, Li_{z}Ni_{(1-x-y)}CoₓM_{y}O₂, in which 0.01 ≤ x ≤ 0.15, 0 ≤ y ≤ 0.15, and 0.97 ≤ z ≤ 1.20; M is at least one element selected from Mn, V, Mg, Mo, Nb, and Al, or Li_{z}Co₍₁₋ₓ₎MₓO₂, in which 0 ≤ x ≤ 0.1 and 0.97 ≤ z ≤ 1.20; M is at least one element selected from the group consisting of Mn, Ni, V, Mg, Mo, Nb, and Al. In this case, the SEI is easily formed on the surface of the electrode, and as a result, battery performance can be further improved. In particular, in a case of using a positive electrode active material having a high content ratio of Ni, such as Li_{z}Ni_{(1-x-y)}CoₓM_{y}O₂, in which 0.01 ≤ x ≤ 0.20, 0 ≤ y ≤ 0.30, and 0.90 ≤ z ≤ 1.20; M is at least one element selected from Mn, V, Mg, Mo, Nb, and Al, the capacity of the secondary battery tends to decrease in a case of repeating charging and discharging. However, since the above-mentioned non-aqueous electrolyte solution for a secondary battery contains the first compound and the second compound, it is possible to effectively suppress the decrease in capacity of the secondary battery.

The negative electrode active material layer 2 contains a negative electrode active material. The negative electrode active material may be, for example, a material capable of occluding and releasing lithium. Examples of the negative electrode active material include carbon materials such as graphite and amorphous carbon; and oxide materials such as indium oxide, silicon oxide, tin oxide, lithium titanate, zinc oxide, and lithium oxide. The negative electrode active material may be a lithium metal or a metal material capable of forming an alloy with lithium. Specific examples of the metal capable of forming an alloy with lithium include Cu, Sn, Si, Co, Mn, Fe, Sb, and Ag. The negative electrode active material may contain an alloy containing two or three kinds of metals, containing these metals and lithium. These materials may be used alone or in combination of two or more kinds thereof.

From the viewpoint of higher energy density, the negative electrode active material may contain a carbon material such as graphite, and an Si-based active material selected from Si, Si alloy, Si oxide, and the like. From the viewpoint of achieving both cycle characteristics and an increase in energy density, the negative electrode active material may contain graphite and an Si-based active material. In these cases, a ratio of the mass of the Si-based active material to the total mass of the carbon material and the Si-based active material may be 0.5% by mass or more, 1% by mass or more, or 2% by mass or more; and may be 95% by mass or less, 50% by mass or less, or 40% by mass or less. The ratio of the mass of the Si-based active material to the total mass of the carbon material and the Si-based active material may be 0.5% to 95% by mass, 0.5% to 50% by mass, 0.5% to 40% by mass, 1% to 95% by mass, 1% to 50% by mass, 1% to 40% by mass, 2% to 95% by mass, 2% to 50% by mass, or 2% to 40% by mass.

The positive electrode active material layer 7 and the negative electrode active material layer 2 may further contain a binder. Examples of the binder include PolyVinylideneDiFluoride (PVDF), a vinylidene fluoride-hexafluoropropylene copolymer, a vinylidene fluoride-tetrafluoroethylene copolymer, a styrene-butadiene copolymerized rubber (SBR), carboxymethyl cellulose (CMC), polytetrafluoroethylene, polypropylene, polyethylene, polyimide, polyamideimide, polyacrylic acid, polyacrylic acid metal salt, polyvinyl alcohol, acrylic acid-polyacrylonitrile, polyacrylamide, polymethacrylic acid, and a copolymer thereof. The positive electrode active material layer and the negative electrode active material layer may contain the same binder or different binders. In a case where the positive electrode active material layer contains a binder, in particular, the binder contained in the positive electrode active material layer may be PolyVinylideneDiFluoride (PVDF). In a case where the negative electrode active material layer contains a binder, the binder contained in the negative electrode active material layer may be particularly CMC and/or SBR.

The positive electrode active material layer 7 and the negative electrode active material layer 2 may further contain a conductive auxiliary agent. As the conductive auxiliary agent, a substance containing a conductive material such as carbon can be used. Examples of the carbon-containing substance include carbonaceous fine particles such as graphite, carbon black, acetylene black, and ketjen black, and carbon fibers.

The separator 6 may be a porous film. The porous film may contain, for example, a resin selected from the group consisting of polyethylene, polypropylene, and a fluororesin. The separator 6 may have a monolayer structure, or may have a multilayer structure consisting of a plurality of layers.

A specific form, such as a shape and a thickness, of each member constituting the secondary battery such as a sodium ion battery, a lithium ion battery, and a lithium ion capacitor can be appropriately set by those skilled in the art. The configuration of the lithium ion battery is not limited to the embodiment shown in Fig. 1, and can be appropriately modified.

### Examples

Hereinafter, the present invention will be described in more detail with reference to Examples. However, the present invention is not limited to these examples.

### 1. Production of non-aqueous electrolyte solution for secondary battery

The following components were prepared in order to produce a non-aqueous electrolyte solution.

### First compound

(1-1): compound represented by the Formula (1-1), synthesized by the following procedure
(1-3): compound represented by the Formula (1-3), synthesized by the following procedure

### Other compounds

(i): compound represented by the following Formula (i)

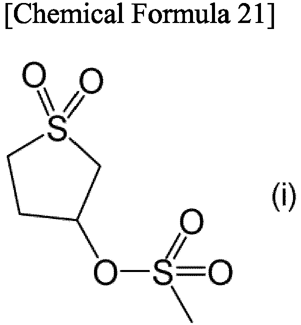

### Second compound

(2-2): compound represented by the Formula (2-2) (manufactured by Tokyo Chemical Industry Co., Ltd., lithium difluoro phosphate)
(3-1): compound represented by the Formula (3-1) (manufactured by Sigma-Aldrich Co., LLC, lithium difluoro(oxalato)borate)
(3-2): compound represented by the Formula (3-2) (manufactured by Sigma-Aldrich Co., LLC., lithium bis(oxalato)borate)
(4-2): compound represented by the Formula (4-2) (manufactured by Chemfish Co., Ltd., lithium difluorobis(oxalato)phosphate)

### <Production Example 1: Synthesis of compound represented by the Formula (1-1)>

3-Sulfolene (236.3 g, 2.0 mol) and 500 mL of water were charged into a 2 L four-neck flask equipped with a stirrer, a condenser, and a thermometer, and the obtained mixture was heated to 40°C to dissolve the 3-sulfolene in the water until a uniform solution was obtained. Sodium hydroxide (104.0 g, 2.6 mol) was added to the obtained solution, and the mixture was stirred for 10 hours while maintaining the temperature at 40°C. Thereafter, the flask was cooled in an ice bath. Concentrated sulfuric acid (130.1 g, 1.3 mol) was added dropwise to the obtained reaction solution over 30 minutes. A solid was precipitated by concentrating and removing a part of the solvent from the reaction solution, the precipitated solid was filtered, and the obtained filtrate was concentrated to obtain 3-hydroxysulfolane (250.6 g, yield with respect to 3-sulfolene: 92%).

Subsequently, 3-hydroxysulfolane (5.45 g, 40 mmol) obtained above, allyl sulfonyl chloride (6.18 g, 44 mmol), and 20 mL of acetonitrile were charged into a 200 mL four-neck flask equipped with a stirrer, a condenser, a thermometer, and a dropping funnel. The flask was cooled in an ice bath, and triethylamine (4.05 g, 40 mmol) was added dropwise thereto while stirring the reaction solution in the flask. After completion of the dropwise addition, the reaction solution was stirred for 1 hour while maintaining the temperature at 0°C to 5°C. Thereafter, water was added thereto, and the precipitated white solid was filtered. The obtained solid was washed with methanol and then dried under reduced pressure to obtain a white solid compound (compound represented by the Formula (1-1)) (5.28 g, yield with respect to 3-hydroxysulfolane: 53%).
¹H-NMR (400 MHz, CD₃CN) δ (ppm): 2.51 (m, 2H), 3.18 (m, 2H), 3.37 (m, 2H), 3.51 (m, 2H), 5.28 (m, 1H), 6.25 (d, 1H), 6.40 (d, 1H), 6.69 (m, 1H)

### <Production Example 2: Synthesis of compound represented by the Formula (1-3)>

Sodium 2-methyl-2-propene-1-sulfonate (8.04 g, 50 mmol), N,N-dimethylformamide (0.37 g, 5 mmol), and 30 mL of dichloromethane were charged into a 200 mL four-neck flask equipped with a stirrer, a condenser, a thermometer, and a dropping funnel. While stirring the reaction solution in the flask, thionyl chloride (7.14 g, 60 mmol) was added dropwise thereto at room temperature (25°C). After completion of the dropwise addition, the reaction solution was stirred for 24 hours while maintaining the temperature at 20°C to 25°C. Thereafter, water was added thereto to carry out liquid separation, and the oil layer was concentrated to obtain 2-methyl-2-propene-1-sulfonyl chloride (7.73 g, yield with respect to sodium 2-methyl-2-propene-1-sulfonate: 100%).

Subsequently, 3-hydroxysulfolane (5.45 g, 40 mmol) obtained in the above-mentioned first half of Production Example 1, 2-methyl-2-propene-1-sulfonyl chloride (6.80 g, 44 mmol), and 20 mL of acetonitrile were charged into a 200 mL four-neck flask equipped with a stirrer, a condenser, a thermometer, and a dropping funnel. The flask was cooled in an ice bath, and triethylamine (4.05 g, 40 mmol) was added dropwise thereto while stirring the reaction solution in the flask. After completion of the dropwise addition, the reaction solution was stirred for 1 hour while maintaining the temperature at 0°C to 5°C. Thereafter, water was added thereto, and the precipitated white solid was filtered. The obtained solid was washed with methanol and then dried under reduced pressure to obtain a white solid compound (compound represented by the Formula (1-3)) (5.84 g, yield with respect to 3-hydroxysulfolane: 50%).
¹H-NMR (400 MHz, CD₃CN) δ (ppm): 1.93 (m, 3H), 2.53 (m, 2H), 3.18 (m, 2H), 3.36 (dd, 1H), 3.41 (dd, 1H), 3.97 (s, 2H), 5.15 (s, 1H), 5.22 (s, 1H), 5.42 (m, 1H)

### <Comparative Example 1>

Ethylene carbonate (EC) and ethyl methyl carbonate (EMC) were mixed at a volume composition ratio of EC:EMC = 30:70 to produce a non-aqueous solvent. LiPF₆ as an electrolyte was dissolved in the non-aqueous solvent at a concentration of 1 mol/L to prepare a non-aqueous electrolyte solution for a secondary battery.

### <Comparative Examples 2 to 7>

A non-aqueous electrolyte solution for a secondary battery was prepared in the same manner as in Comparative Example 1, except that LiPF₆ as an electrolyte was added to the non-aqueous solvent and dissolved, and then the first compound or the second compound of the type shown in Table 1 was added. A content of the first compound or the second compound was 1.0% by mass based on the total amount of the non-aqueous electrolyte solution.

### <Comparative Example 8>

A non-aqueous electrolyte solution for a secondary battery was prepared in the same manner as in Comparative Example 1, except that LiPF₆ as an electrolyte was added to the non-aqueous solvent and dissolved, and then the compound represented by the Formula (i) and the compound represented by the Formula (4-2) (second compound) were added. A content of the compound represented by the Formula (i) and a content of the compound represented by the Formula (4-2) were each 1.0% by mass based on the total amount of the non-aqueous electrolyte solution.

### <Examples 1 to 6>

A non-aqueous electrolyte solution for a secondary battery was prepared in the same manner as in Comparative Example 1, except that LiPF₆ as an electrolyte was added to the non-aqueous solvent and dissolved, and then the first compound of the type shown in Table 1 and the second compound of the type shown in Table 1 were added. Contents of the first compound and the second compound were each 1.0% by mass based on the total amount of the non-aqueous electrolyte solution.

### 2. Evaluation

### <Production of non-aqueous electrolyte solution secondary battery>

A positive electrode sheet (manufactured by Hassan Co., Ltd.) containing a lithium-containing composite oxide and a negative electrode sheet (manufactured by Hassan Co., Ltd.) containing graphite were prepared. The positive electrode sheet included an aluminum foil (thickness: 20 µm) as a positive electrode current collector, and positive electrode active material layers formed on both surfaces of the aluminum foil. The positive electrode active material layer contained a lithium-containing composite oxide (LiNi_{0.5}Co_{0.2}Mn_{0.3}O₂) as a positive electrode active material, carbon black (CB) and carbon (KS) as conductive auxiliary agents, and PolyVinylideneDiFluoride (PVDF) as a binder. A mass ratio of these components was lithium-containing composite oxide:CB:KS:PVDF = 92:2.5:2.5:3. The negative electrode sheet included a copper foil (thickness: 10 µm) as a negative electrode current collector, and negative electrode active material layers formed on both surfaces of the copper foil. The negative electrode active material layer contained graphite (Gr) as a negative electrode active material, and sodium carboxymethyl cellulose (CMC) and styrene-butadiene rubber (SBR) as binders. A mass ratio of these components was Gr:CMC:SBR = 98:1:1. The negative electrode sheet and the positive electrode sheet were alternately stacked with a separator made of polypropylene interposed therebetween, whereby a battery element including, as electrodes, a total of 13 layers with 7 layers of the negative electrode sheets and 6 layers of the positive electrode sheets.

The battery element produced by the above-mentioned method was inserted into a bag formed of a laminate film having an aluminum foil (thickness: 40 µm) and a resin layer covering both surfaces of the aluminum foil, such that ends of the positive electrode sheet and the negative electrode sheet protruded from the bag. Furthermore, the non-aqueous electrolyte solution prepared in each of Comparative Examples and Examples was added to the bag, and the bag was vacuum-sealed to obtain a sheet-shaped non-aqueous electrolyte solution secondary battery. In order to increase adhesiveness between the electrodes, the sheet-shaped non-aqueous electrolyte solution secondary battery was sandwiched between glass plates and pressurized.

### <Evaluation of storage characteristics>

### (Measurement of initial capacity)

Each non-aqueous electrolyte solution secondary battery was charged at 25°C with a current corresponding to 0.1 C for 1 hour, and then held at 25°C for 10 hours. Thereafter, charging was performed for 5 hours with a current corresponding to 0.1 C, and then held at 45°C for 24 hours. Next, the battery was discharged to 3 V with a current corresponding to 0.1 C at 25°C, and then degassed. Subsequently, the battery was aged by sequentially performing the following operations: charging to 4.2 V at a current corresponding to 0.2 C and discharging to 3 V at a current corresponding to 0.2 C for 3 cycles; charging to 4.2 V at a current corresponding to 0.5 C and discharging to 3.0 V at a current corresponding to 0.5 C for 3 cycles; and charging to 4.2 V at a current corresponding to 1 C and discharging to 3.0 V at a current corresponding to 1 C for 3 cycles, for stabilization of the battery. Thereafter, charging and discharging in an initial stage were performed at a current corresponding to 2.0 C. The discharge capacity observed during the charging and discharging in the initial stage was referred to as "initial capacity". In addition, a volume of the non-aqueous electrolyte solution secondary battery after the initial capacity measurement was measured by the Archimedes method, and defined as "initial volume".

### (Measurement of characteristics after storage)

The non-aqueous electrolyte solution secondary battery after the charging and discharging in the initial stage was charged to 4.2 V at 1 C at 25°C and then held at 60°C for 30 days. Thereafter, the non-aqueous electrolyte solution secondary battery was cooled to 25°C, and discharged to 3 V with a current corresponding to 1 C, and a discharge capacity at this time was recorded as "residual capacity". In addition, a volume of the battery after the residual capacity measurement was measured by the Archimedes method, and defined as "volume after high-temperature storage". Next, two-cycle charging and discharging was repeated with a current corresponding to 1C, and a discharge capacity in the second cycle was recorded as "recovery capacity".

The amount of gas generated, the residual capacity retention rate, and the recovery capacity retention rate were calculated according to the following expressions, respectively. Amount of gas generated (cm3) = Volume after high-temperature storage - Initial volume Residual capacity retention rate (%) = (Residual capacity/Initial capacity) × 100 Recovery capacity retention rate (%) = (Recovery capacity/Initial capacity) × 100

The results are shown in Table 1. The amount of gas generated indicates a relative value in a case where the amount of gas generated in Comparative Example 1 is set to 100.

**[Table 1]**

| | First compound | Other compound | Second compound | Amount of gas generated | Residual capacity retention rate (%) | Recovery capacity retention rate (%) |
|---|---|---|---|---|---|---|
| Comparative Example 1 | - | - | - | 100 | 63 | 76 |
| Comparative Example 2 | (1-1) | - | - | 10 | 72 | 87 |
| Comparative Example 3 | (1-3) | - | - | 8 | 70 | 86 |
| Comparative Example 4 | - | - | (2-2) | 75 | 70 | 84 |
| Comparative Example 5 | - | - | (3-1) | 93 | 68 | 81 |
| Comparative Example 6 | - | - | (3-2) | 97 | 67 | 74 |
| Comparative Example 7 | - | - | (4-2) | 98 | 72 | 86 |
| Comparative Example 8 | - | (i) | (4-2) | 12 | 75 | 85 |
| Example 1 | (1-1) | - | (2-2) | 5 | 75 | 87 |
| Example 2 | (1-1) | - | (3-2) | 8 | 73 | 87 |
| Example 3 | (1-1) | - | (4-2) | 5 | 74 | 88 |
| Example 4 | (1-3) | - | (2-2) | 2 | 76 | 87 |
| Example 5 | (1-3) | - | (3-1) | 2 | 76 | 87 |
| Example 6 | (1-3) | - | (4-2) | 3 | 76 | 86 |

### Reference Signs List

1: Lithium ion battery
2: Negative electrode active material layer
3: Negative electrode current collector
4: Negative electrode
5: Non-aqueous electrolyte solution
6: Separator
7: Positive electrode active material layer
8: Positive electrode current collector
9: Positive electrode

## Claims

1. A non-aqueous electrolyte solution for a secondary battery, comprising:
a first compound represented by the following Formula (1);
a second compound being at least one selected from the group consisting of a compound represented by the following Formula (2), a compound represented by the following Formula (3), and a compound represented by the following Formula (4);
a non-aqueous solvent; and
an electrolyte, 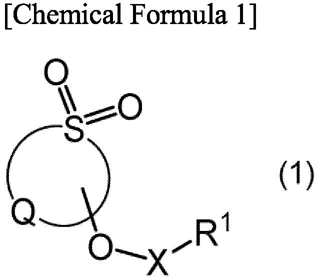
in the Formula (1), Q represents a hydrocarbon group that has 4 to 8 carbon atoms and may be substituted, the hydrocarbon group forming a cyclic group with a sulfur atom of a sulfonyl group, X represents a sulfonyl group or a carbonyl group, and R¹ represents an alkenyl group having 3 to 6 carbon atoms, which may be substituted with a halogen atom, an alkynyl group having 3 to 6 carbon atoms, which may be substituted with a halogen atom, an alkenyloxy group having 3 to 6 carbon atoms, which may be substituted with a halogen atom, or an alkynyloxy group having 3 to 6 carbon atoms, which may be substituted with a halogen atom, 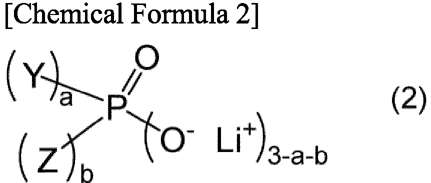
in the Formula (2), Y and Z each independently represent a hydrogen atom or a fluorine atom, and a and b each independently represent 0 or 1, 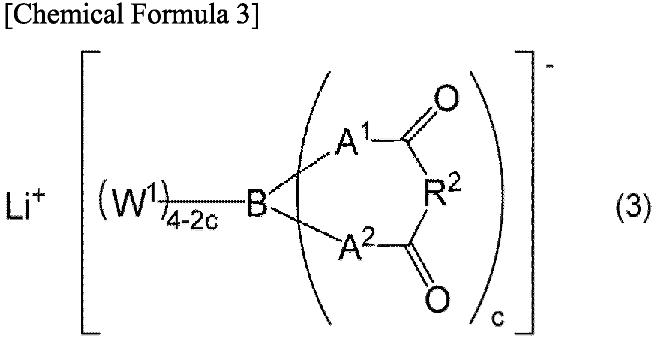
in the Formula (3), A¹ and A² each independently represent an oxygen atom or a sulfur atom, R² represents a direct bond or a hydrocarbon group having 1 to 3 carbon atoms, W¹ represents a halogen atom, and c represents 1 or 2, 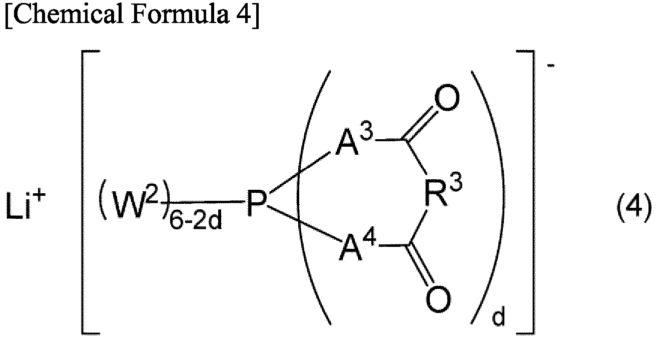
in the Formula (4), A³ and A⁴ each independently represent an oxygen atom or a sulfur atom, R³ represents a direct bond or a hydrocarbon group having 1 to 3 carbon atoms, W² represents a halogen atom, and d represents 1 or 2.

2. The non-aqueous electrolyte solution for a secondary battery according to Claim 1,
wherein Q is a hydrocarbon group having 4 carbon atoms, which may be substituted.

3. The non-aqueous electrolyte solution for a secondary battery according to Claim 1 or 2,
wherein X is a sulfonyl group.

4. The non-aqueous electrolyte solution for a secondary battery according to Claim 1 or 2,
wherein the second compound comprises the compound represented by the Formula (3).

5. The non-aqueous electrolyte solution for a secondary battery according to Claim 3,
wherein the second compound comprises the compound represented by the Formula (3).

6. The non-aqueous electrolyte solution for a secondary battery according to Claim 1 or 2,
wherein the second compound comprises the compound represented by the Formula (2), and
both Y and Z are fluorine atoms.

7. The non-aqueous electrolyte solution for a secondary battery according to Claim 3,
wherein the second compound comprises the compound represented by the Formula (2), and
both Y and Z are fluorine atoms.

8. The non-aqueous electrolyte solution for a secondary battery according to Claim 1 or 2,
wherein the electrolyte comprises a lithium salt.

9. An additive used in combination with a compound represented by the following Formula (1) to be added to a non-aqueous electrolyte solution, the additive comprising:
at least one selected from the group consisting of a compound represented by the following Formula (2), a compound represented by the following Formula (3), and a compound represented by the following Formula (4), 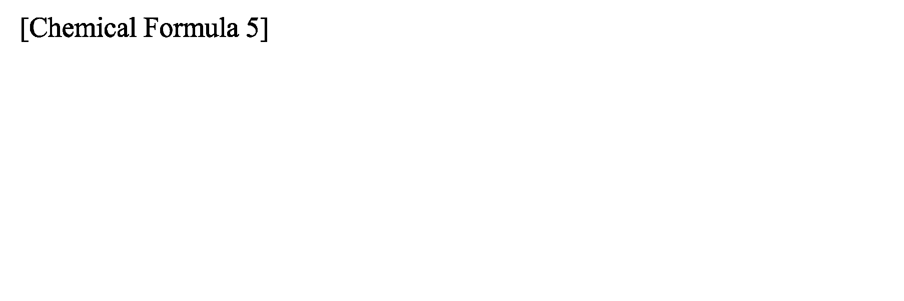 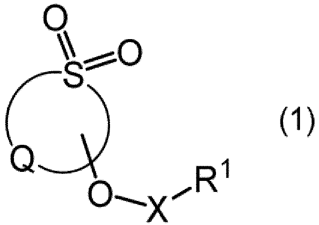
in the Formula (1), Q represents a hydrocarbon group that has 4 to 8 carbon atoms and may be substituted, the hydrocarbon group forming a cyclic group with a sulfur atom of a sulfonyl group, X represents a sulfonyl group or a carbonyl group, and R¹ represents an alkenyl group having 3 to 6 carbon atoms, which may be substituted with a halogen atom, an alkynyl group having 3 to 6 carbon atoms, which may be substituted with a halogen atom, an alkenyloxy group having 3 to 6 carbon atoms, which may be substituted with a halogen atom, or an alkynyloxy group having 3 to 6 carbon atoms, which may be substituted with a halogen atom, 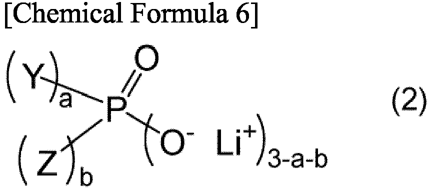
in the Formula (2), Y and Z each independently represent a hydrogen atom or a fluorine atom, and a and b each independently represent 0 or 1, 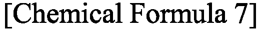 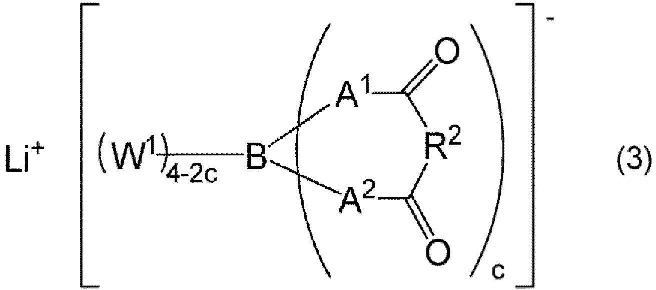
in the Formula (3), A¹ and A² each independently represent an oxygen atom or a sulfur atom, R² represents a direct bond or a hydrocarbon group having 1 to 3 carbon atoms, W¹ represents a halogen atom, and c represents 1 or 2, 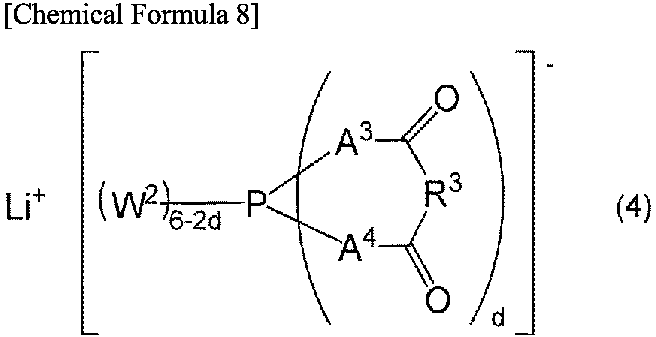
in the Formula (4), A³ and A⁴ each independently represent an oxygen atom or a sulfur atom, R³ represents a direct bond or a hydrocarbon group having 1 to 3 carbon atoms, W² represents a halogen atom, and d represents 1 or 2.

10. A lithium ion battery comprising:
the non-aqueous electrolyte solution for a secondary battery according to Claim 1 or 2;
a positive electrode; and
a negative electrode.

11. A lithium ion capacitor comprising:
the non-aqueous electrolyte solution for a secondary battery according to Claim 1 or 2;
a positive electrode; and
a negative electrode.
